# EUROPEAN PATENT SPECIFICATION

(11) **EP 3 392 590 B1**
(45) Date of publication and mention of the grant of the patent: **13.11.2019**
(21) Application number: 18159957.2
(22) Date of filing: 05.03.2018
(51) Int. Cl.: F28D 7/00, F02B 29/04, F25B 29/00, F28D 7/16

(54) **SUPERCHARGE AIR COOLING UNIT**
LADELUFTKÜHLEINHEIT
UNITÉ DE REFROIDISSEMENT D'AIR DE SURALIMENTATION

(30) Priority: 23.03.2017 JP 2017057301
(43) Date of publication of application: 24.10.2018
(73) Proprietor: Kabushiki Kaisha Kobe Seiko Sho (Kobe Steel, Ltd.), Kobe-shi, Hyogo, 651-8585 (JP); Asahi Shipping Co. Ltd., Tokyo 105-0003 (JP); Tsuneishi Shipbuilding Co., Ltd., Hiroshima 720-0394 (JP); Miura Co., Ltd., Matsuyama-shi, Ehime 799-2696 (JP)
(72) Inventor: ADACHI, Shigeto, Takasago-shi,, Hyogo 676-8670 (JP); NARUKAWA, Yutaka, Takasago-shi,, Hyogo 676-8670 (JP); NISHIMURA, Kazumasa, Takasago-shi,, Hyogo 676-8670 (JP); FUJII, Tetsuro, Minato-ku,, Tokyo 105-0003 (JP); ARAHIRA, Kazuya, Minato-ku,, Tokyo 105-0003 (JP); YAMAMOTO, Hiroyuki, Fukuyama-shi,, Hiroshima 720-0394 (JP); ISHIDA, Tomoaki, Fukuyama-shi,, Hiroshima 720-0394 (JP)
(74) Representative: TBK

(56) References cited:
- EP-A2- 3 073 065
- WO-A1-2013/046853
- WO-A1-2014/181824
- JP-A- 2016 079 881
- US-A1- 2015 285 102

## Description

### Technical Field

The present invention relates to a supercharge air cooling unit according to the preamble of claim 1. JP 2016 079881 discloses such a unit.

### Background Art

There are conventionally known supercharge air cooling units which cool supercharging air to be supplied to an engine of a ship or the like. As one example of such a supercharge air cooling unit, Unexamined Japanese Patent Publication No. 2015-200181 recites a unit equipped with an air intake line which links an engine and a supercharger, a waste heat recovery device which recovers heat energy of supercharging air passing through the air intake line, and a gas cooler which cools supercharging air passing through the air intake line.

The waste heat recovery device disclosed in Unexamined Japanese Patent Publication No. 2015-200181 has a heater which heats a working medium, an expander into which a working medium flowing out from the heater flows, and a motive power recovery device linked to the expander. In the heater, heat exchange is conducted between the supercharging air passing through the air intake line and the working medium. As a result, while the supercharging air is cooled, the working medium evaporates. Flowing of the evaporated working medium into the expander results in recovering heat energy in the motive power recovery device.

Additionally, in Unexamined Japanese Patent Publication No. 2015-200181, the gas cooler is located downstream of the heater of the waste heat recovery device in a flow direction of supercharging air. In the gas cooler, heat exchange between supercharging air passing through the air intake line provided in the gas cooler and a cooling medium further cools supercharging air cooled in the waste heat recovery device.

Since in Unexamined Japanese Patent Publication No. 2015-200181, supercharging air can be cooled by the heater of the waste heat recovery device and the gas cooler, even when either one of the heater and the gas cooler develops a failure, the supercharging air can be cooled.

When a heat transfer coefficient of the working medium used in the heater is lower than a heat transfer coefficient of a cooling medium (water or sea water) used in the gas cooler, a heat transfer area of the heater should be increased. The heater therefore should be formed to be larger than the gas cooler. In this case, there is a place in which an air stagnation of supercharging air is formed in the heater, so that the supercharging air might flow insufficiently. As a result, there might occur a problem of reduction in an amount of heat exchange between the working medium passing through the air stagnation and the supercharging air, so that the working medium passing through the air stagnation hardly evaporates.

### Summary of Invention

An object of the present invention is to provide a supercharge air cooling unit enabling a working medium passing through a heater to surely evaporate.

A supercharge air cooling unit according to one aspect of the present invention includes an evaporator portion in which heat exchange is conducted between supercharging air to be supplied from a supercharger to an engine and working medium to evaporate the working medium; an expander into which the working medium evaporated in the evaporator portion flows; a motive power recovery device which recovers motive power of the expander; and a gas cooler portion in which heat exchange is conducted between the supercharged air cooled by the evaporator portion and cooling medium to further cool the supercharged air. A flow path of the supercharged air in the evaporator portion is formed to have a width larger than a width of a flow path of the supercharged air in the gas cooler portion, thereby a stepped portion being formed in the flow path of the supercharged air in the evaporator portion. The evaporator portion is configured such that a flow rate of the working medium passing through a first region as a region expanded by the stepped portion is smaller than a flow rate of the working medium passing through a second region as a region other than the first region in the evaporator portion, or such that in the first region, the working medium does not pass through.

### Brief Description of Drawings

FIG. 1 is a schematic configuration view of a supercharge air cooling unit according to a first embodiment;
FIG. 2 is a partial enlarged view for illustrating a flow of supercharging air in the supercharge air cooling unit according to the first embodiment;
FIG. 3 is a partial enlarged view for illustrating a flow of supercharging air in the vicinity of an evaporator portion of the supercharge air cooling unit according to the first embodiment;
FIG. 4 is an enlarged view showing a disposition state of a heat transfer tube in the evaporator portion of the supercharge air cooling unit according to the first embodiment;
FIG. 5 is an enlarged view showing a disposition state of a heat transfer tube in an evaporator portion of a supercharge air cooling unit according to a second embodiment;
FIG. 6 is an enlarged view for illustrating a flow of supercharging air in the vicinity of an evaporator portion of a supercharge air cooling unit according to a

### third embodiment; and

FIG. 7 is an enlarged view showing a disposition state of a heat transfer tube in an evaporator portion of a supercharge air cooling unit according to a fourth embodiment.

### Description of Embodiments

In the following, each embodiment of the present invention will be described with reference to the drawings. Each drawing to be referred to in the following shows simplified main components required for illustrating a supercharge air cooling unit X1 according to each embodiment. The supercharge air cooling unit X1 according to each embodiment can therefore include arbitrary components not shown in each drawing to be referred to in the present specification.

### (First Embodiment)

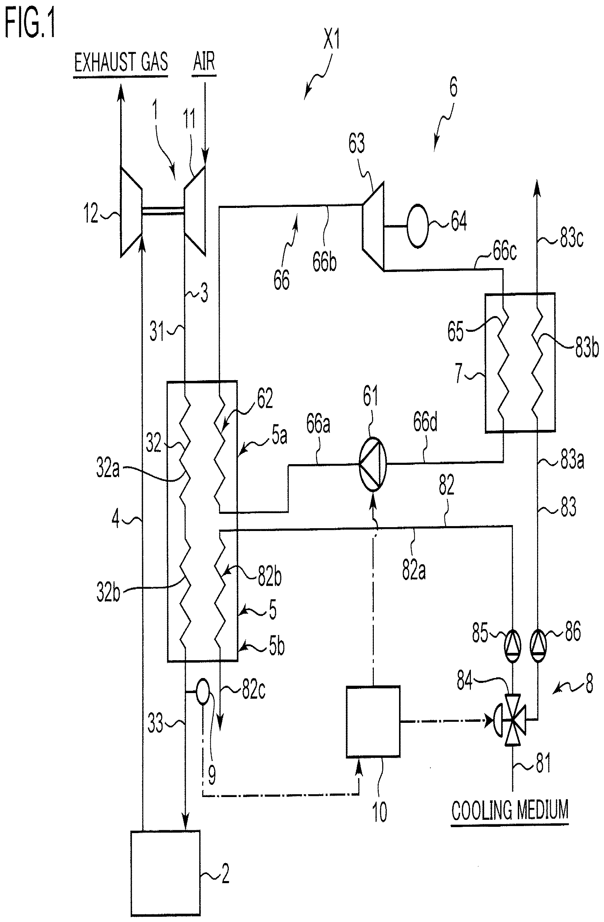

As shown in FIG. 1, the supercharge air cooling unit X1 according to the first embodiment is a unit for cooling supercharged air supplied from a supercharger 1 to an engine 2. In the first embodiment, the supercharge air cooling unit X1 is mounted on a ship travelled by motive power of the engine 2. Specifically, the supercharge air cooling unit X1 according to the first embodiment includes an energy recovery device 6, a cooling device 8, a detection sensor 9, and a control unit 10. These components are mounted on a ship together with the supercharger 1, the engine 2, a scavenging line 3, and an exhaust line 4.

An evaporator portion 5a provided in the energy recovery device 6 and a gas cooler portion 5b provided in the cooling device 8 configure a cooler 5. In the evaporator portion 5a, heat exchange is conducted between supercharged air supplied from the supercharger 1 to the engine 2 and a working medium to evaporate the working medium. In the gas cooler portion 5b, heat exchange is conducted between the supercharged air cooled in the evaporator portion 5a and a cooling medium to further cool the supercharged air. Specific configuration of the cooler 5 will be described later.

In the following, with reference to FIG. 1, specific description will be made of the supercharger 1, the engine 2, the scavenging line 3, the exhaust line 4, the energy recovery device 6, the cooling device 8, the detection sensor 9, and the control unit 10 mounted on a ship.

The supercharger 1 has a compressor 11 and a turbine 12. The compressor 11 and the turbine 12 are coupled to each other by a shaft. The compressor 11 is linked to the engine 2 via the scavenging line 3, and the turbine 12 is linked to the engine 2 via the exhaust line 4.

Air supplied to the compressor 11 is compressed by the compressor 11 to become supercharged air, and the supercharged air is supplied to the engine 2 via the scavenging line 3. This drives the engine 2, so that the ship mounted with the engine 2 travels. At this time, exhaust gas generated in the engine 2 is sent to the turbine 12 through the exhaust line 4. The turbine 12 is driven by expansion energy of the exhaust gas, and a driving force of the turbine 12 drives the compressor 11. Then, the exhaust gas having passed through the turbine 12 is discharged to the outside of the turbine 12.

Here, the scavenging line 3 in which supercharged air flows from the compressor 11 toward the engine 2 has a first shell 31, a second shell 32, and a third shell 33.

The first shell 31 is a part into which supercharged air flows from the compressor 11 and is located upstream of the cooler 5 in a supercharged air flowing direction. The second shell 32 is a part into which supercharged air flows from the first shell 31 and configures a casing of the cooler 5. The second shell 32 is linked to a downstream side portion of the first shell 31 in the supercharged air flowing direction. The third shell 33 is a part which causes supercharged air flowing out from the second shell 32 to flow into the engine 2, and links a downstream side portion of the second shell 32 in the supercharged air flowing direction to the engine 2.

The supercharged air generated in the supercharger 1 is cooled in the cooler 5 to a predetermined temperature while passing through the scavenging line 3 in the order of the first shell 31, the second shell 32, and the third shell 33, and is supplied to the engine 2.

The energy recovery device 6 is a power generation system which uses a Rankine cycle of a working medium. Working media used by the energy recovery device 6 include organic fluid having a boiling point lower than that of water such as, for example, R245fa.

The energy recovery device 6 includes a pump 61, a first cooling portion 62, an expander 63, a motive power recovery device 64, a condensation portion 65, and a circulation pipe 66. The pump 61, the first cooling portion 62, the expander 63, and the condensation portion 65 are linked by the circulation pipe 66 such that a working medium circulates in this order. Specifically, the pump 61 and the first cooling portion 62 are linked to each other via a first pipe 66a of the circulation pipe 66. Additionally, the first cooling portion 62 and the expander 63 are linked to each other via a second pipe 66b of the circulation pipe 66. Additionally, the expander 63 and the condensation portion 65 are linked to each other via a third pipe 66c of the circulation pipe 66. Additionally, the condensation portion 65 and the pump 61 are linked to each other via a fourth pipe 66d of the circulation pipe 66.

The pump 61 applies pressure on the working medium so as to circulate in the circulation pipe 66. The pump 61 is linked to the first pipe 66a to pressure-feed the working medium such that the working medium flows into the first cooling portion 62 through the first pipe 66a. Used as the pump 61 is a centrifugal pump having an impeller as a rotor, a gear pump having a rotor formed with one pair of gears, and the like.

The first cooling portion 62 is a component of the evaporator portion 5a. Specifically, the evaporator portion 5a has a first cooling shell 32a to be described later, in which supercharged air flows, and the first cooling portion 62 in which the working medium flows. In the first cooling portion 62, heat exchange is conducted between supercharged air flowing in the first cooling shell 32a from the supercharger 1 to the engine 2 and the working medium flowing into the first cooling portion 62. As a result, the supercharged air is cooled, while the working medium evaporates. The first cooling portion 62 is located downstream of the pump 61 in a working medium flowing direction. The first pipe 66a links the first cooling portion 62 and the pump 61 such that a working medium of a liquid phase which is pressure-fed by the pump 61 flows into the first cooling portion 62. The first cooling portion 62 cools supercharged air flowing in the second shell 32 of the scavenging line 3. As a result, in the supercharge air cooling unit X1, heat exchange is conducted between the working medium of a liquid phase and the supercharged air in the evaporator portion 5a of the cooler 5, so that the working medium evaporates and the supercharged air is cooled.

The expander 63 is located downstream of the first cooling portion 62 in the working medium flowing direction. The second pipe 66b links the first cooling portion 62 and the expander 63 such that a working medium of a gas phase which has evaporated in the first cooling portion 62 flows into the expander 63. In the present embodiment, as the expander 63, a screw expander is used. In a screw expander, a rotor portion as a screw is driven to rotate by expansion energy of the working medium of a gas phase. As the expander 63, for example, a centrifugal or scroll type expander, or the like may be used, not limited to a screw expander.

The motive power recovery device 64 is connected to the rotor portion of the expander 63. The motive power recovery device 64 recovers motive power through the rotor portion driven to rotate by the expansion energy of the working medium of a gas phase. This enables the energy recovery device 6 to convert heat energy of the supercharged air to electrical energy to recover the energy. The motive power recovery device 64 is not limited to have a configuration for electrical energy, but may have a configuration for conversion to kinetic energy.

The condensation portion 65 is located downstream of the expander 63 in the working medium flowing direction. The third pipe 66c links the expander 63 and the condensation portion 65 such that the working medium of a gas phase flowing out of the expander 63 flows into the condensation portion 65.

Here, the condensation portion 65 is provided in a condenser 7. In the condenser 7, heat exchange is conducted between the working medium of a gas phase flowing from the expander 63 into the condensation portion 65 and a cooling medium to be described later. As a result, the working medium flowing in the condensation portion 65 condenses. Then, the working medium condensing in the condensation portion 65 flows into the pump 61 through the fourth pipe 66d and is again sent to the first cooling portion 62.

The cooling device 8 is a device provided separately from the energy recovery device 6 for cooling supercharged air. Unlike the energy recovery device 6 which cools supercharged air by a working medium, the cooling device 8 cools supercharged air by a cooling medium. In the present embodiment, since the supercharge air cooling unit X1 is mounted on a ship, sea water can be used as a cooling medium.

The cooling device 8 has a supply flow path 81, a first flow path 82, a second flow path 83, a flow rate adjustment unit 84, and pumps 85 and 86.

The supply flow path 81 is liked to a supply source (illustration omitted) of a cooling medium.

The first flow path 82 is linked to a downstream end of the supply flow path 81 in a cooling medium flowing direction via the flow rate adjustment unit 84. The first flow path 82 includes an upstream portion 82a, a second cooling portion 82b, and a downstream portion 82c.

The upstream portion 82a is connected to the flow rate adjustment unit 84 to link the supply flow path 81 and the second cooling portion 82b via the flow rate adjustment unit 84. The pump 85 is attached to the upstream portion 82a. A cooling medium flowing into the upstream portion 82a from the supply flow path 81 via the flow rate adjustment unit 84 is pressure- fed to the second cooling portion 82b by the pump 85.

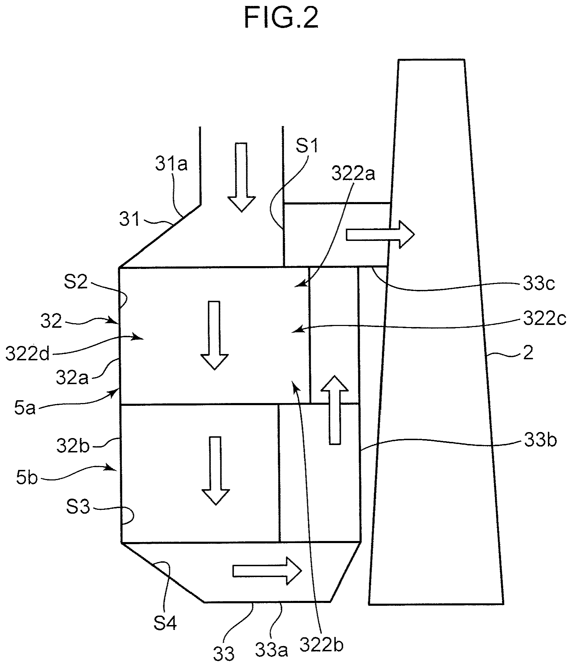

In the second cooling portion 82b, heat exchange is conducted between supercharged air supplied from the supercharger 1 to the engine 2 and cooling medium flowing into the second cooling portion 82b. As a result, in the second cooling portion 82b, the supercharged air is cooled. The second cooling portion 82b links the upstream portion 82a and the downstream portion 82c. The second cooling portion 82b is provided in the gas cooler portion 5b of the cooler 5. Specifically, the gas cooler portion 5b has a second cooling shell 32b to be described later in which supercharged air flows (see FIG. 2), and the second cooling portion 82b in which a cooling medium flows. In the second cooling portion 82b, the supercharged air flowing in the second shell 32 of the scavenging line 3 is cooled by the cooling medium flowing in the second cooling portion 82b. As a result, in the cooler 5 of the supercharge air cooling unit X1, heat exchange between the supercharged air and the working medium enables cooling of the supercharged air, while heat exchange between the supercharged air and the cooling medium enables cooling of the supercharged air.

The downstream portion 82c is linked to a downstream side of the second cooling portion 82b in the cooling medium flowing direction. The cooling medium flowing out from the second cooling portion 82b is discharged to the outside of the cooling device 8 through the downstream portion 82c.

The second flow path 83 is linked to a downstream side of the supply flow path 81 in the cooling medium flowing direction via the flow rate adjustment unit 84 separately from the first flow path 82. The second flow path 83 includes an upstream portion 83a, a third cooling portion 83b, and a downstream portion 83c.

The upstream portion 83a links the supply flow path 81 and the third cooling portion 83b. To the upstream portion 83a, the pump 86 is attached. The cooling medium flowing from the supply flow path 81 into the upstream portion 83a via the flow rate adjustment unit 84 is pressure-fed to the third cooling portion 83b by the pump 86.

The third cooling portion 83b links the upstream portion 83a and the downstream portion 83c. Similarly to the condensation portion 65 of the energy recovery device 6, the third cooling portion 83b is provided in the condenser 7. Specifically, the third cooling portion 83b is provided in the condenser 7 so as to be able to condense the working medium flowing in the condensation portion 65. As a result, in the supercharge air cooling unit X1, heat exchange between the working medium and the cooling medium in the condenser 7 enables the working medium to be condensed.

The downstream portion 83c is linked to a downstream side of the third cooling portion 83b in the cooling medium flowing direction. A cooling medium flowing from the third cooling portion 83b is discharged to the outside of the cooling device 8 through the downstream portion 83c.

The flow rate adjustment unit 84 is a valve member capable of adjusting a first flow rate F1 and a second flow rate F2, the first flow rate F1 being a flow rate of a cooling medium to be supplied to the first flow path 82, the second flow rate F2 being a flow rate of a cooling medium to be supplied to the second flow path 83. In the present embodiment, the flow rate adjustment unit 84 is a three-way valve such as a three-way electromagnetic valve, a three-way motor-operated valve, or the like. In the cooling device 8, a ratio of the first flow rate F1 to be supplied to the first flow path 82 to the second flow rate F2 to be supplied to the second flow path 83 from the supply source through the supply flow path 81 can be adjusted by adjusting a valve opening of the flow rate adjustment unit 84 with respect to the respective flow paths 82 and 83.

The detection sensor 9 is attached to the third shell 33 of the scavenging line 3. This enables the detection sensor 9 to detect a temperature T of supercharged air before flowing into the engine 2 after being cooled by the first cooling portion 62 or the second cooling portion 82b in the cooler 5. A signal indicative of the temperature T detected by the detection sensor 9 is sent to the control unit 10.

The control unit 10 receives temperature information from the detection sensor 9 and compares the temperature information with an upper limit temperature value T1 stored in a storage section to determine whether the temperature of the supercharged air cooled by the cooler 5 is not less than the upper limit temperature value T1 or not.

Here, with reference to FIGS. 2 to 4, specific description will be made of the scavenging line 3. FIG. 2 is a view showing a flow of supercharged air to be supplied from the first shell 31 on the scavenging line 3 to the engine 2 via the second shell 32 and the third shell 33. As shown in FIG. 2, the engine 2 is on the lateral side of the first shell 31, the second shell 32, and the third shell 33.

The first shell 31 is formed to be tubular. The inside of the first shell 31 configures a flow path S1 of supercharged air. On a side surface of the first shell 31 opposite to a side surface on which the engine 2 is located, a slant portion 31a is formed to be inclined so that a width of the flow path S1 becomes gradually wider toward the first cooling shell 32a. On the other hand, a side surface of the first shell 31 on the engine side extends vertically.

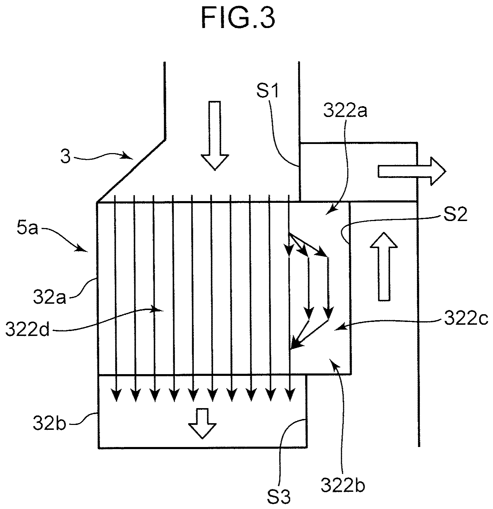

As shown in FIG. 3, the second shell 32 has the first cooling shell 32a configuring the evaporator portion 5a and the second cooling shell 32b configuring the gas cooler portion 5b. The first cooling shell 32a is formed to be tubular. The inside of the first cooling shell 32a configures a flow path S2 of supercharged air. The first cooling shell 32a is connected to the first shell 31. An inlet of the first cooling shell 32a for supercharged air is formed to have a width larger than a width of an outlet of the first shell 31 for supercharged air. Thus, on the flow path S2 for supercharged air in the evaporator portion 5a, a stepped portion 322a is formed in which a sectional area where supercharged air flows is sharply expanded. In the stepped portion 322a, an air stagnation is formed in which less supercharged air flows.

The second cooling shell 32b is formed to be tubular. The inside of the second cooling shell 32b configures a flow path S3 of supercharged air. The second cooling shell 32b is located on a downstream of the first cooling shell 32a in the supercharged air flowing direction and is connected to the first cooling shell 32a.

An outlet of the first cooling shell 32a for supercharged air is formed to have a width larger than a width of an inlet of the second cooling shell 32b for supercharged air. Thus, a stepped portion 322b is formed in which the flow path S2 of supercharged air in the evaporator portion 5a is sharply reduced in size. In other words, the stepped portion 322b is formed by forming the flow path of supercharged air in the evaporator portion 5a to have a width larger than a width of a flow path of supercharged air in the gas cooler portion 5b. Therefore, space in the first cooling shell 32a includes a region (first region) 322c expanded by the stepped portion 322b. The first region 322c extends from the stepped portion 322b in a tube axial direction of the first cooling shell 32a and is deviated laterally outward from an air inlet of the second cooling shell 32b in an up-down direction view. Additionally, the space inside the first cooling shell 32a includes a second region 322d as a main region extending from the inlet of supercharged air of the second cooling shell 32b in the tube axial direction of the first cooling shell 32a. Accordingly, the space in the first cooling shell 32a includes the second region 322d and the first region 322c, the second region 322d extending straight from the inlet of supercharged air of the second cooling shell 32b, the first region 322c being located on the side of the second region 322d. In the stepped portion 322b, less supercharged air flows.

The third shell 33 has a curved portion 33a, a straight tube portion 33b and a suction portion 33c, the curved portion 33a changing a direction of supercharged air flowing out of the second cooling shell 32b to the engine 2 side, the straight tube portion 33b upwardly guiding the supercharged air flowing out the curved portion 33a, the suction portion 33c allowing the supercharged air flowing out the straight tube portion 33b to suck into the engine 2. The curved portion 33a is located on the downstream side of the second cooling shell 32b in the supercharged air flowing direction, and is connected to the lower end portion of the second cooling shell 32b. The straight tube portion 33b is connected to the curved portion 33a, and is arranged between the second shell 32 and the engine 2. The straight tube portion 33b guides supercharged air to a position at a height of an air intake port located in an upper portion of the engine 2.

The suction portion 33c is arranged between the first shell 31 and the engine 2 to connect the straight tube portion 33b with the engine 2. The inside of the third shell 33 configures a flow path S4 of supercharged air.

As shown in FIG. 3, a large part of the supercharged air flowing from the first shell 31 into the first cooling shell 32a goes straight in the flow direction. Specifically, the supercharged air flows in the second region 322d in the first cooling shell 32a. As this time, a part of the supercharged air flows in a position below the stepped portion 322a. Specifically, the part of the supercharged air flows in the first region 322c. At a position of an upper part of the stepped portion 322b, the supercharged air flowing in the first region 322c returns to the inside of the second region 322d to flow into the second cooling shell 32b.

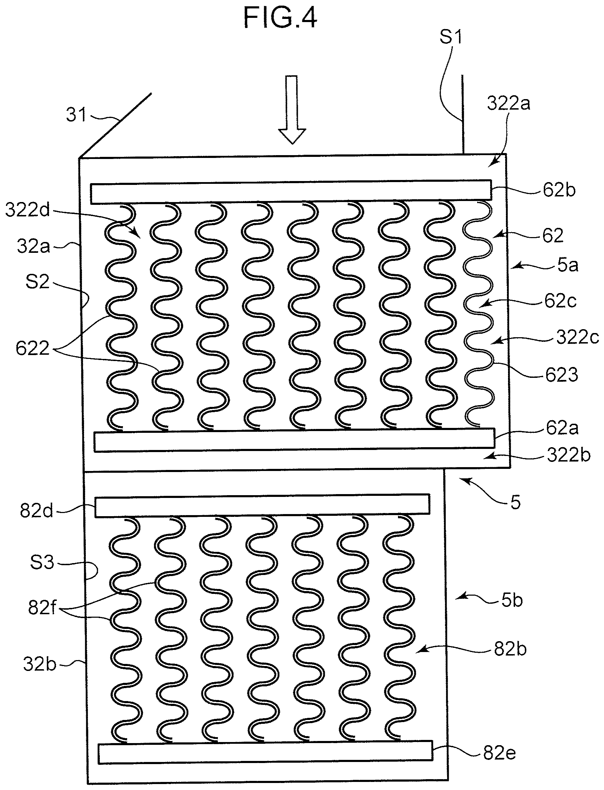

FIG. 4 is a schematic view of the cooler 5 seen from the side, and in the present embodiment, the cooler 5 is a shell-and-tube type heat exchanger. The evaporator portion 5a of the cooler 5 is arranged on the upstream side of the gas cooler portion 5b in the supercharged air flowing direction. The evaporator portion 5a has the first cooling shell 32a in which supercharged air flows, and the first cooling portion 62 in which the working medium flows. The first cooling portion 62 has a working medium inflow header 62a, a working medium outflow header 62b, and a plurality of heat transfer tubes 62c.

The working medium inflow header 62a and the working medium outflow header 62b are arranged side by side in the flow path S2 of the supercharged air so as to be spaced apart along the supercharged air flowing direction. The working medium inflow header 62a extends in a direction perpendicular to the supercharged air flowing direction, with one end leading to the stepped portion 322b (the first region 322c). The working medium outflow header 62b extends in a direction perpendicular to the supercharged air flowing direction, with one end leading to the stepped portion 322a (the first region 322c).

The plurality of heat transfer tubes 62c has a first heat transfer tube 622 and a second heat transfer tube 623. The first heat transfer tube 622 and the second heat transfer tube 623 link the working medium inflow header 62a and the working medium outflow header 62b. The first heat transfer tube 622 and the second heat transfer tube 623 extend in a flow direction of supercharged air while zigzagging in a direction vertical to a page of the figure. For convenience, FIG. 4 illustrates the first heat transfer tube 622 and the second heat transfer tube 623 zigzagging from side to side.

The first heat transfer tube 622 is arranged in the second region 322d. Specifically, the first heat transfer tube 622 is arranged in a region 322d other than a region extending from the stepped portion 322a to the stepped portion 322b. Therefore, the first heat transfer tube 622 is housed within a range of a width of the supercharged air inlet of the second cooling shell 32b. In other words, the first heat transfer tube 622 is arranged at a position where the flow of the supercharging air goes straight.

The second heat transfer tube 623 is arranged in the first region 322c. Specifically, the second heat transfer tube 623 is arranged in a region leading from the stepped portion 322a to the stepped portion 322b. Therefore, one end of the second heat transfer tube 623 is connected to the working medium inflow header 62a in the first region 322c, and the other end of the second heat transfer tube 623 is connected to the working medium outflow header 62b in the first region 322c.

The second heat transfer tube 623 is formed to be narrower than the first heat transfer tube 622. As a result, the flow rate of the working medium flowing in the second heat transfer tube 623 is smaller than the flow rate of the working medium flowing in the first heat transfer tube 622.

The working medium pressurized to feed by the pump 61 of the energy recovery device 6 flows from the first pipe 66a into the heat transfer tubes 62c in the flow path S2 of supercharged air through the working medium inflow header 62a. The working medium flows in the heat transfer tubes 62c in a direction generally parallel to a direction opposite to the supercharged air flowing direction to flow out to the second pipe 66b through the working medium outflow header 62b. The working medium flows upwardly in the heat transfer tubes 62c from the bottom.

The gas cooler portion 5b has the second cooling shell 32b in which supercharged air flows and the second cooling portion 82b in which cooling medium flows. The second cooling portion 82b has a cooling medium inflow header 82d, a cooling medium outflow header 82e, and a plurality of heat transfer tubes 82f.

The cooling medium inflow header 82d and the cooling medium outflow header 82e are arranged side by side in the flow path S3 so as to be spaced apart along the supercharged air flowing direction.

Each of the plurality of heat transfer tubes 82f links the cooling medium inflow header 82d and the cooling medium outflow header 82e. Each of the plurality of heat transfer tubes 82f extends in the flow direction of the supercharged air while zigzagging in the direction vertical to the page of the figure. For convenience, FIG. 4 illustrates the plurality of heat transfer tubes 82f zigzagging from side to side.

The cooling medium flowing into the upstream portion 82a of the first flow path 82 through the supply flow path 81 flows into each of the heat transfer tubes 82f in the flow path S3 through the cooling medium inflow header 82d to flow in each heat transfer tube 82f in a direction generally parallel to the supercharged air flowing direction, and flows out to the downstream portion 82c through the cooling medium outflow header 82e.

Since in the supercharge air cooling unit X1 of the present embodiment, the second heat transfer tube 623 is formed to be narrower than the first heat transfer tube 622, a flow rate of the working medium flowing in the second heat transfer tube 623 is smaller than a flow rate of the working medium flowing in the first heat transfer tube 622. The supercharge air cooling unit X1 of the present embodiment therefore enables the working medium flowing in the second heat transfer tube 623 to evaporate even when supercharged air flows insufficiently in the first region 322c of the flow path S2 for supercharged air.

### (Second Embodiment)

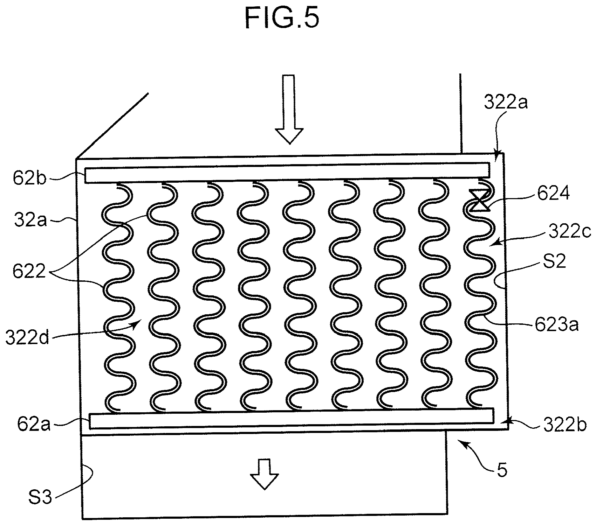

Next, a supercharge air cooling unit X1 according to a second embodiment will be described with reference to FIG. 5. In the present embodiment, description will be made only of a part different from the first embodiment, and the same parts of configuration as those of the first embodiment are given the same reference codes as those of the first embodiment to omit description thereof.

Similarly to FIG. 4, FIG. 5 is an enlarged view of a part of the cooler 5 seen from the side. In the supercharge air cooling unit X1 according to the second embodiment, as shown in FIG. 5, a second heat transfer tube 623a is arranged in a region from the stepped portion 322a to the stepped portion 322b in a flow path S2. Specifically, the second heat transfer tube 623a is arranged in the first region 322c.

The second heat transfer tube 623a is formed such that a flow path width of the working medium has the same size as that of a flow path width of the working medium in the first heat transfer tube 622. In other words, the second heat transfer tube 623a has the same tube diameter as the tube diameter of the first heat transfer tube 622. The second heat transfer tube 623a is provided with a flow rate adjustment valve 624 which narrows down a flow path of the working medium. As a result, a flow rate of the working medium flowing in the second heat transfer tube 623a can be made lower than a flow rate of the working medium flowing in the first heat transfer tube 622. As the flow rate adjustment valve 624, any type of valve can be used that is capable of narrowing down a flow path of a working medium.

Since in the supercharge air cooling unit X1 according to the second embodiment, the second heat transfer tube 623a is provided with the flow rate adjustment valve 624 capable of narrowing down a flow path of the working medium, a flow rate of the working medium flowing in the second heat transfer tube 623a can be made lower than a flow rate of the working medium flowing in the first heat transfer tube 622. The supercharge air cooling unit X1 according to the second embodiment therefore enables the working medium flowing in the second heat transfer tube 623a to evaporate even when in the second cooling shell 32a, supercharged air flows less sufficiently in the first region 322c than in a second region 322d.

### (Third Embodiment)

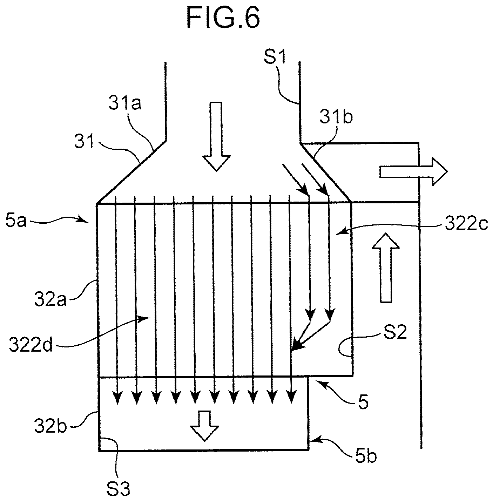

Next, a supercharge air cooling unit X1 according to a third embodiment will be described with reference to FIG. 6. In the present embodiment, description will be made only of a part different from the first embodiment, and the same parts of configuration as those of the first embodiment are given the same reference codes as those of the first embodiment to omit description thereof.

FIG. 6 is an enlarged view showing a flow of supercharged air in the vicinity of an evaporator portion 5a of the supercharge air cooling unit X1. In the supercharge air cooling unit X1 according to the present embodiment, as shown in FIG. 6, in a first shell 31 of a scavenging line 3, a slant portion 31b is formed on a side surface on a side where an engine 2 is arranged. The slant portion 31b is inclined such that a width of the flow path for the supercharged air is gradually increased toward a connection portion connecting the first shell 31 and a first cooling shell 32a. Therefore, an outlet the first shell 31 for supercharged air is formed to have the same size as that of an inlet of the first cooling shell 32a for supercharged air.

In the supercharge air cooling unit X1 according to the present embodiment, as shown in FIG. 6, a part of the supercharged air flowing from the first shell 31 to the first cooling shell 32a advances along the slant portion 31b. Therefore, in the connection portion between the slant portion 31b of the first shell 31 and the first cooling shell 32a, the supercharged air easily flows. As a result, in the vicinity of the connection portion between the slant portion 31b of the first shell 31 and the first cooling shell 32a, an air stagnation of supercharged air is hardly generated. This therefore increases, in the above supercharge air cooling unit X1, an amount of heat exchange between a working medium and supercharged air in the evaporator portion 5a to be larger than that in the first embodiment.

As the second heat transfer tube arranged in the first cooling shell 32a, a similar heat transfer tube to the second heat transfer tube 623 in the first embodiment or to the second heat transfer tube 623a provided with the flow rate adjustment valve 624 in the second embodiment can be used.

### (Fourth Embodiment)

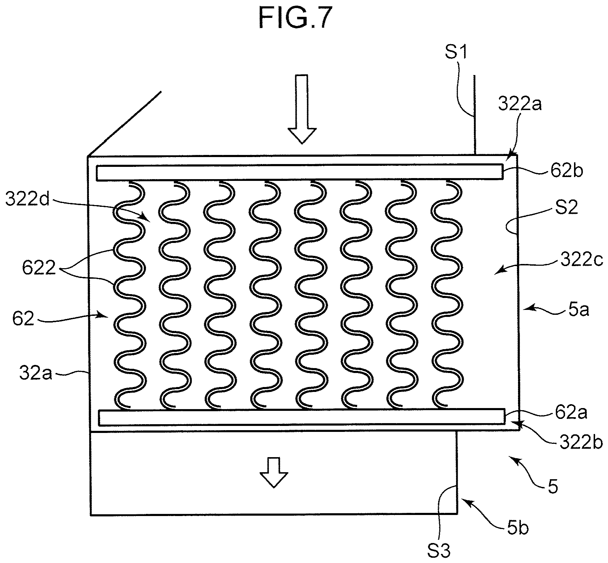

Next, a supercharge air cooling unit X1 according to a fourth embodiment will be described with reference to FIG. 7. The present embodiment is different from other embodiments in that a first region 322c is provided with no second heat transfer tube. The remaining parts are given the same reference codes as those of the first embodiment to omit description thereof.

In the supercharge air cooling unit X1 according to the present embodiment, while heat transfer tubes 622 are arranged in the second region 322d, no heat transfer tube is arranged in the first region 322c. This surely prevents a failure of evaporation of a working medium in a region between stepped portions 322a and 322b.

The foregoing described embodiments are construed to be in all aspects illustrative and not restrictive. The scope of the present invention is indicated not by the above description of the respective embodiments but by the scope of claims for patent, and includes meaning equivalent to the scope of claims and all modifications within the scope.

For example, although in each of the above respective embodiments, the description has been made of a case where the supercharge air cooling unit X1 is applied to a ship, the application is not limited thereto. Any supercharge air cooling unit X1 can be used that cools supercharged air to be supplied from a supercharger 1 to an engine 2, and can be applied to, for example, a vehicle or the like mounted with a supercharger 1 and an engine 2. In a case where the supercharge air cooling unit X1 is applied to a vehicle or the like, not sea water but, for example, cooling water stored in a stagnation tank can be used as a cooling medium in the cooling device 8.

Additionally, while in the above respective embodiments, the evaporator portion 5a and the gas cooler portion 5b of the cooler 5 are configured with a shell-and-tube type heat exchanger, this is not always the case. The evaporator portion 5a and the gas cooler portion 5b of the cooler 5 may be, for example, a plate heat exchanger configured by laminating a plurality of plates. In this case, one of spaces adjacent to each other with a plate provided therebetween serves as a flow path of the supercharged air and the other space serves as a flow path of the working medium. The one space in the evaporator portion 5a is formed to have a width larger than a width of the one space in the gas cooler portion 5b. That results in forming a stepped portion.

Additionally, while in the above respective embodiments, the description has been made of a case where the detection sensor 9 is attached to the third shell 33 of the scavenging line 3, this is not always the case. Any detection sensor 9 can be used that is capable of detecting information about a temperature of supercharged air cooled in the cooler 5, and may be attached to, for example, the cooler 5.

Here, the embodiments will be summarized.

The supercharge air cooling unit according to the embodiment includes an evaporator portion in which heat exchange is conducted between supercharging air to be supplied from a supercharger to an engine and working medium to evaporate the working medium; an expander into which the working medium evaporated in the evaporator portion flows; a motive power recovery device which recovers motive power of the expander; and a gas cooler portion in which heat exchange is conducted between the supercharged air cooled by the evaporator portion and cooling medium to further cool the supercharged air. A flow path of the supercharged air in the evaporator portion is formed to have a width larger than a width of a flow path of the supercharged air in the gas cooler portion, thereby a stepped portion being formed in the flow path of the supercharged air in the evaporator portion. The evaporator portion is configured such that a flow rate of the working medium passing through a first region as a region expanded by the stepped portion is smaller than a flow rate of the working medium passing through a second region as a region other than the first region in the evaporator portion, or such that in the first region, the working medium does not pass through.

Since in the above supercharge air cooling unit, an air stagnation is generated in the first region of the evaporator portion, the supercharged air flowing insufficiently in the air stagnation, an amount of heat exchange between the working medium and the supercharged air passing through the first region is small. However, because a flow rate of the working medium passing through the first region is smaller than a flow rate of the working medium passing through the second region, it is possible to facilitate evaporation of the working medium passing through the first region. Alternatively, because the working medium does not pass through the first region, it is possible to avoid a situation where no working medium evaporates.

In the above configuration, the evaporator portion may have a plurality of heat transfer tubes in which the working medium flows, the plurality of heat transfer tubes including a first heat transfer tube arranged in the second region and a second heat transfer tube arranged in the first region, in which the second heat transfer tube may be formed to be narrower than the first heat transfer tube.

Since in the above supercharge air cooling unit, the second heat transfer tube is formed to be narrower than the first heat transfer tube, a flow rate of the working medium flowing in the second heat transfer tube can be made lower than a flow rate of the working medium flowing in the first heat transfer tube without providing the heat transfer tube with a unit for narrowing down the flow rate of the working medium. It is therefore possible, with a simple configuration, to enable the working medium passing through the stepped portion to evaporate in the above supercharge air cooling unit.

In the above configuration, the evaporator portion may have a plurality of heat transfer tubes in which the working medium flows, the plurality of heat transfer tubes including a first heat transfer tube arranged in the second region and a second heat transfer tube arranged in the first region, in which the second heat transfer tube may be provided with a flow rate adjustment valve which narrows down a flow path of the working medium.

In the above supercharge air cooling unit, by tightening the flow rate adjustment valve, the second heat transfer tube is allowed to have a flow rate of the working medium flowing therein lower than a flow rate of the working medium flowing in the first heat transfer tube. It is therefore possible to facilitate the working medium passing through the stepped portion to evaporate in the above supercharge air cooling unit.

In the above configuration, a scavenging line for transferring the supercharged air from the supercharger to the engine may have a first shell for transferring the supercharging air from the supercharger to the evaporator portion, and a first cooling shell provided in the evaporator portion. In the first shell, a slant portion is formed to be inclined so that a width of a flow path of the supercharged air becomes gradually wider toward a connection portion with the first cooling shell, and the first shell and the first cooling shell may have an identical width in the connection portion.

Since in the above supercharge air cooling unit, supercharged air easily flows to the connection portion between the first shell and the first cooling shell, an air stagnation of supercharged air is hardly generated in the vicinity of the connection. This therefore increases, in the above supercharge air cooling unit, an amount of heat exchange between the working medium in the first cooling portion and the supercharged air is increased.

With the above configuration, in the evaporator portion, a flow path of the working medium may be arranged in the second region, and a flow path of the working medium may not be arranged in the first region.

Since in the above supercharge air cooling unit, the flow path of the working medium is arranged in the second region other than the first region, it is possible to prevent a failure of evaporation of the working medium in the stepped portion.

The supercharge air cooling unit according to the embodiment enables the working medium passing through the vicinity of the stepped portion to evaporate even when an amount of heat exchange between the working medium passing through the vicinity of the stepped portion and the supercharged air is small.

A supercharge air cooling unit (X1) includes an evaporator portion (5a) in which heat exchange is conducted between supercharging air to be supplied from a supercharger (1) to an engine (2) and a working medium to evaporate the working medium; an expander (63) into which the working medium evaporated in the evaporator portion (5a) flows; a motive power recovery device (64) which recovers motive power of the expander; and a gas cooler portion (5b) in which heat exchange is conducted between the supercharging air cooled by the evaporator portion (5a) and a cooling medium to further cool the supercharging air, in which forming a flow path of the supercharging air in the evaporator portion (5a) to have a width larger than a width of a flow path of the supercharging air in the gas cooler portion (5b) results in forming a stepped portion (322b) in a flow path (S2) of the supercharging air in the evaporator portion (5a), and the evaporator portion (5a) is configured such that a flow rate of the working medium passing through in a first region (322c) expanded by the stepped portion (322b) is smaller than a flow rate of the working medium passing through in a second region (322d) in the evaporator portion (5a).

## Claims

1. A supercharge air cooling unit comprising:
an evaporator portion (5a) in which heat exchange is conducted between supercharging air to be supplied from a supercharger (1) to an engine (2) and working medium to evaporate the working medium;
an expander (63) into which the working medium evaporated in the evaporator portion (5a) flows;
a motive power recovery device (64) which recovers motive power of the expander (63); and
a gas cooler portion (5b) in which heat exchange is conducted between the supercharged air cooled by the evaporator portion (5a) and cooling medium to further cool the supercharged air,
**characterised in that** a flow path of the supercharged air in the evaporator portion (5a) is formed to have a width larger than a width of a flow path of the supercharged air in the gas cooler portion (5b), thereby a stepped portion (322b) being formed in the flow path of the supercharged air in the evaporator portion (5a), and
the evaporator portion (5a) is configured such that a flow rate of the working medium passing through a first region (322c) as a region expanded by the stepped portion (322b) is smaller than a flow rate of the working medium passing through a second region (322d) as a region other than the first region (322c) in the evaporator portion (5a), or such that in the first region (322c), the working medium does not pass through.

2. The supercharge air cooling unit according to claim 1, wherein
the evaporator portion (5a) has a plurality of heat transfer tubes in which the working medium flows, and
the plurality of heat transfer tubes include a first heat transfer tube (622) arranged in the second region (322d) and a second heat transfer tube (623) arranged in the first region (322c),
the second heat transfer tube (623) being formed to be narrower than the first heat transfer tube (622).

3. The supercharge air cooling unit according to claim 1, wherein
the evaporator portion (5a) has a plurality of heat transfer tubes in which the working medium flows,
the plurality of heat transfer tubes include a first heat transfer tube (622) arranged in the second region (322d) and a second heat transfer tube (623) arranged in the first region (322c), and
the second heat transfer tube (623) is provided with a flow rate adjustment valve (624) which narrows down a flow path of the working medium.

4. The supercharge air cooling unit according to any one of claims 1 to 3, wherein a scavenging line for transferring the supercharged air from the supercharger to the engine has a first shell (31) for transferring the supercharged air from the supercharger to the evaporator portion (5a), and a first cooling shell (32a) provided in the evaporator portion (5a),
in the first shell (31), a slant portion (31a) is formed to be inclined so that a width of a flow path of the supercharged air becomes gradually wider toward a connection portion connecting the first shell (31) and the first cooling shell (32a), and
the first shell (31) and the first cooling shell (32a) have an identical width in the connection portion.

5. The supercharge air cooling unit according to claim 1, wherein
in the evaporator portion (5a), a flow path of the working medium is arranged in the second region (322d), and no flow path of the working medium is arranged in the first region (322c).

## Patentansprüche

1. Ladeluftkühlungsvorrichtung mit:
einem Verdampferabschnitt (5a) in dem Wärmeaustausch zwischen verdichtender Luft, die von einem Verdichter (1) zu einem Motor (2) geführt wird, und einem Arbeitsmedium durchgeführt wird, um das Arbeitsmedium zu verdampfen;
einem Expander (63), in den das Arbeitsmedium strömt, das in dem Verdampferabschnitt (5a) verdampft wird;
einer Antriebskraftgewinnungsvorrichtung (64), die Antriebskraft von dem Expander (63) gewinnt; und
einem Gaskühlungsabschnitt (5b), in dem Wärmeaustusch zwischen der verdichteten Luft, die mittels des Verdampferabschnittes (5a) gekühlt wird, und einem Kühlmedium durchgeführt wird, um die verdichtete Luft weiter abzukühlen, **dadurch gekennzeichnet, dass**
ein Strömungsweg der verdichteten Luft in dem Verdampferabschnitt (5a) so gestaltet ist, dass er eine Breite hat, die größer ist als eine Breite eines Strömungsweges der verdichteten Luft in dem Gaskühlungsanschnitt (5b), wodurch ein gestufter Abschnitt (322b) in dem Strömungsweg der verdichteten Luft in dem Verdampferabschnitt (5a) ausgebildet ist, und
der Verdampferabschnitt (5a) so konfiguriert ist, dass eine Strömungsgeschwindigkeit des Arbeitsmediums, das durch einen ersten Bereich (322c) hindurchströmt, der ein Bereich ist, der mittels des gestuften Bereiches (322b) erweitert wird, kleiner ist als eine Strömungsgeschwindigkeit des Arbeitsmediums, das durch einen zweiten Bereich (322d) hindurchströmt, der ein anderer Bereich als der erste Bereich (322c) in dem Verdampferabschnitt (5a) ist, oder so konfiguriert ist, dass das Arbeitsmedium nicht durch den ersten Bereich (322c) hindurchströmt.

2. Ladeluftkühlungsvorrichtung nach Anspruch 1, wobei
der Verdampferabschnitt (5a) eine Vielzahl an Wärmeübertragungsrohren hat, in denen das Arbeitsmedium strömt, und
die Vielzahl an Wärmeübertragungsrohren ein erstes Wärmeübertragungsrohr (622), das in dem zweiten Bereich (322d) angeordnet ist, und ein zweites Wärmeübertragungsrohr (623) aufweist, das in dem ersten Bereich (322c) angeordnet ist,
wobei das zweite Wärmeübertragungsrohr (623) so gestaltet ist, dass er enger als das erste Wärmeübertragungsrohr (622) ist.

3. Ladeluftkühlungsvorrichtung nach Anspruch 1, wobei
der Verdampferabschnitt (5a) eine Vielzahl an Wärmeübertragungsrohren hat, in denen das Arbeitsmedium strömt,
wobei die Vielzahl an Wärmeübertragungsrohren ein erstes Wärmeübertragungsrohr (622), das in dem zweiten Bereich (322d) angeordnet ist, und ein zweites Wärmeübertragungsrohr (623) aufweist, das in dem ersten Bereich (322c) angeordnet ist, und
das zweite Wärmeübertragungsrohr (623) mit einem Strömungsgeschwindigkeitseinstellventil (624) versehen ist, das sich abwärts eines Strömungspfades des Arbeitsmediums verjüngt.

4. Ladeluftkühlungsvorrichtung nach einem der Ansprüche 1 bis 3, wobei eine Spülungsleitung, um die verdichtete Luft von dem Verdichter zu dem Motor zu leiten, eine erste Außenfläche (31), um die verdichtete Luft von dem Verdichter zu dem Verdampferabschnitt (5a) zu überführen, und eine erste Kühlungsaußenfläche (32a) hat, die in dem Verdampferabschnitt (5a) vorgesehen ist,
in der ersten Außenfläche (31) ein schräger Abschnitt (31a) gestaltet ist, der so geneigt ist, dass eine Breite eines Strömungsweges der verdichteten Luft in Richtung eines Verbindungsabschnittes, der die erste Außenfläche (31) und die erste Kühlungsaußenfläche (32a) verbindet, allmählich weiter wird, und
die erste Außenfläche (31) und die erste Kühlungsaußenfläche (32a) eine identische Breite in dem Verbindungsabschnitt haben.

5. Ladeluftkühlungsvorrichtung nach Anspruch 1, wobei
ein Strömungsweg des Arbeitsmediums in dem Verdampferabschnitt (5a) in dem zweiten Bereich (322d) angeordnet ist und kein Strömungsweg in dem ersten Bereich (322c) angeordnet ist.

## Revendications

1. Unité de refroidissement d'air de suralimentation comprenant :
une portion d'évaporateur (5a) dans laquelle un échange de chaleur est effectué entre de l'air de suralimentation devant être fourni par un compresseur de suralimentation (1) à un moteur (2) et un milieu de travail pour évaporer le milieu de travail ;
un détendeur (63) dans lequel le milieu de travail évaporé dans la portion d'évaporateur (5a) s'écoule ;
un dispositif de récupération d'énergie motrice (64) qui récupère l'énergie motrice du détendeur (63) ; et
une portion de refroidisseur de gaz (5b) dans laquelle un échange de chaleur est effectué entre l'air suralimenté refroidi par la portion d'évaporateur (5a) et le milieu de refroidissement pour refroidir davantage l'air suralimenté,
**caractérisée en ce qu'**un chemin d'écoulement de l'air suralimenté dans la portion d'évaporateur (5a) est formé pour avoir une largeur plus grande qu'une largeur d'un chemin d'écoulement de l'air suralimenté dans la portion de refroidisseur de gaz (5b),
ainsi une portion en gradins (322b) est formée dans le chemin d'écoulement de l'air suralimenté dans la portion d'évaporateur (5a), et
la portion d'évaporateur (5a) est configurée de sorte qu'un débit du milieu de travail traversant une première région (322c) en tant que région élargie par la portion en gradins (322b) soit plus petit qu'un débit du milieu de travail traversant une seconde région (322d) en tant que région autre que la première région (322c) dans la portion d'évaporateur (5a), ou de sorte que le milieu de travail ne traverse pas la première région (322c).

2. Unité de refroidissement d'air de suralimentation selon la revendication 1, dans laquelle
la portion d'évaporateur (5a) comporte une pluralité de tubes de transfert de chaleur dans lesquels le milieu de travail s'écoule, et
la pluralité de tubes de transfert de chaleur inclut un premier tube de transfert de chaleur (622) agencé dans la seconde région (322d) et un second tube de transfert de chaleur (623) agencé dans la première région (322c),
le second tube de transfert de chaleur (623) étant formé pour être plus étroit que le premier tube de transfert de chaleur (622).

3. Unité de refroidissement d'air de suralimentation selon la revendication 1, dans laquelle
la portion d'évaporateur (5a) comporte une pluralité de tubes de transfert de chaleur dans lesquels le milieu de travail s'écoule,
la pluralité de tubes de transfert de chaleur inclut un premier tube de transfert de chaleur (622) agencé dans la seconde région (322d) et un second tube de transfert de chaleur (623) agencé dans la première région (322c), et
le second tube de transfert de chaleur (623) est pourvu d'une vanne d'ajustement de débit (624) qui rétrécit un chemin d'écoulement du milieu de travail.

4. Unité de refroidissement d'air de suralimentation selon l'une quelconque des revendications 1 à 3, dans laquelle une ligne d'évacuation destinée à transférer l'air suralimenté du compresseur de suralimentation au moteur comporte une première coque (31) destinée à transférer l'air suralimenté du compresseur de suralimentation à la portion d'évaporateur (5a), et une première coque de refroidissement (32a) ménagée dans la portion d'évaporateur (5a),
dans la première coque (31), une portion penchée (31a) est formée pour être inclinée de sorte qu'une largeur d'un chemin d'écoulement de l'air suralimenté devienne progressivement plus grande vers une portion de raccordement raccordant la première coque (31) et la première coque de refroidissement (32a), et
la première coque (31) et la première coque de refroidissement (32a) ont une largeur identique dans la portion de raccordement.

5. Unité de refroidissement d'air de suralimentation selon la revendication 1, dans laquelle
dans la portion d'évaporateur (5a), un chemin d'écoulement du milieu de travail est agencé dans la seconde région (322d), et aucun chemin d'écoulement du milieu de travail n'est agencé dans la première région (322c).
